# EUROPEAN PATENT APPLICATION

(11) **EP 1 500 960 A1**
(43) Date of publication of application: **26.01.2005**
(21) Application number: 03723190.9
(22) Date of filing: 24.04.2003
(51) Int. Cl.: G02B 6/10, G02B 6/20

(54) **FIBER GRATING AND METHOD FOR MAKING THE SAME**

(30) Priority: 26.04.2002 JP 2002125536
(71) Applicant: Japan Science and Technology Agency, Kawaguchi-shi, Saitama 332-0012 (JP); Showa Electric Wire and Cable Co.,Ltd., Kawasaki-shi, Kanagawa 210-0843 (JP)
(72) Inventor: HOSONO, Hideo, Yamato-shi, Kanagawa 242-0001 (JP); HIRANO, Masahiro, Setagaya-ku, Tokyo 156-0043 (JP); KAWAMURA, Kenichi, Sagamihara-shi, Kanagawa 228-0811 (JP); OTO, Masanori c/o Showa Elec. Wire & Cable Co. Ltd, Kawasaki-shi, Kanagawa 210-0843 (JP)
(74) Representative: Glawe. Delfs. Moll
(86) International application number: PCT/JP2003/005260
(87) International publication number: WO 2003/091774

(57) **Abstract**

A femtosecond laser radiation or a picosecond laser radiation output from light source 6 is split into a first beam reflected to an angle of 90 degrees by a beam splitter 7 and a straightly advancing second beam cut out by the beam splitter 7. The first beam is reflected at an angle of 90 degrees by a second reflecting mirror 9, reflected again at an angle of 90 degrees by a fourth reflecting mirror 11, and is collimated by a second lens 15 to be irradiated onto an optical fiber core wire 13 to be written. The second beam is reflected at an angle of 90 degrees by a first reflection mirror 8, reflected again at an angle of 90 degrees by a second reflection mirror 10, and is collimated by a first lens 14 to be irradiated onto the optical fiber core wire 13 to be written. The femtosecond laser output from the light source 6 is split into two by the beam splitter 7, which interfere with each other in the vicinity of the core of the optical fiber core wire 13 to generate a change in the refractive indices of the glass depending on the light intensity distribution of the interference fringes, such that the gratings are written in the core 1.

## Description

### Technical Field

The present invention relates to fiber gratings and to a method for fabricating fiber gratings; particularly, it relates to fiber gratings having the gratings written on a core made from silica glass free of photosensitive impurities such as germanium, and to a method for fabricating the fiber gratings.

### Background Art

Fiber gratings are diffraction gratings (referred to hereinafter as "gratings") fabricated inside the cores of optical fibers by irradiating light, thereby inducing periodically varying refractive indices therein; because they have the function of reflecting optical signals having specific wavelength (Bragg wavelength) , they are widely used as optical devices and optical filters.

Conventionally known as the optical fibers for use as the object for writing therein the gratings include those having a core made from silica glass containing a predetermined amount of germanium and a cladding surrounding the outer periphery thereof.

However, in the case of optical fibers using silica glass containing germanium, it is difficult to propagate so-called vacuum ultraviolet radiation in the wavelength region of 200 nm or shorter, or so-called deep ultraviolet radiation in the wavelength region of 200 to 300 nm; furthermore, it was found difficult for such optical fibers to endure practical usage due to the degradation caused by the transmission of vacuum ultraviolet and deep ultraviolet radiations.

Accordingly, the development of fiber gratings fabricated by writing the gratings in the core made from silica glass free of germanium is keenly demanded.

On the other hand, as a method for fabricating fiber gratings of the above constitution, there is known a so-called photomask method, which comprises providing phase masks on the optical fiber in a lattice-like arrangement and then irradiating light from the upper side of the phase mask, thereby inducing the periodical change in refractive indices.

However, the method for fabricating fiber gratings above suffered disadvantages as follows.

Firstly, the fiber gratings are fabricated depending on the material characteristics, i.e., on the fact that the refractive indices change by irradiating ultraviolet radiation to the material of the optical fiber; hence, in case of silica glass containing germanium, no change in refractive indices can be inducedbyirradiatingultravioletradiation to the silica glass free of germanium. Accordingly, there was a disadvantage that it was impossible to fabricate gratings on a core made from silica glass free of germanium.

Secondly, because ultraviolet radiation (about 250 nm in wavelength) which cannot be transmitted through the protective coating layer of the optical fiber is used as the light source for writing the gratings, there were disadvantages as such that the writing of the gratings had to be done to the optical fiber core wire in a state with the protective coating layer being removed therefrom, and that the core wire should be recoated with the protective coating layer after writing the gratings therein; thus, it not only required too many process steps, but also caused deterioration in strength of the recoated part.

Thirdly, another disadvantage was the difficulty in changing the periodicity of the gratings, because the periodicity of the gratings was determined by the mask pitch of the phase mask.

Fourthly, another disadvantage was the difficulty in fabricating fiber gratings for ultraviolet radiation, because due to the first reason above, it was not possible to write in the gratings of the optical fibers having high transmittance in the ultraviolet region.

On the other hand, there is proposed a method of writing the gratings in a core made from silica glass free of germanium by using a femtosecond laser, however, the method of simply irradiating femtosecond laser enables production of fiber gratings having a periodicity of up to about 30 µm; accordingly, it had a disadvantage that the gratings are practically unfeasible for use in the ultraviolet, visible, and near infrared wavelength regions.

The present invention has been accomplished with an aim to overcome the aforementioned disadvantages, and the objectives thereof are to provide fiber gratings which can be written into cores made from silica glasses free of germanium and which can be written without removing the protective coating layer from the optical fiber core wire, and to provide a method for fabricating fiber gratings.

### Disclosure of the Invention

In order to accomplish the objectives above, the fiber gratings according to the present invention comprises a core made from a silica glass free of germanium and a cladding surrounding the outer periphery thereof, and the core has gratings written in by irradiating femtosecond laser or picosecond laser radiations.

Further, the core of the fiber gratings of the invention is made from a silica glass containing 100 to 1000 ppm of fluorine.

Furthermore, the cladding of the fiber gratings of the invention is made from a silica glass containing 1000 to 7000 ppm of fluorine, or a silica glass containing 2000 to 10000 ppm of boron.

Further, the cladding of the fiber gratings of the invention is made from an ultraviolet-transmitting resin.

Furthermore, the cladding of the fiber gratings of the invention comprises plural hollow holes in parallel with the optical axis.

Further, the cladding of the fiber gratings of the invention is provided with a protective coating layer on the outer periphery thereof.

According to those fiber gratings according to the invention, gratings can be written in optical fibers having cores made from silica glasses free of germanium, for instance, pure quartz glass, fluorine-doped silica glass, boron-doped silica glass, and phosphorus-doped silica glass; accordingly, there can be provided fiber gratings which had been believed unfeasible, i.e., such having cores made from silica glass free of germanium, and furthermore, there can be provided fiber gratings for ultraviolet radiations. Moreover, since the period of the gratings can be easily varied by adjusting the optical system, so-called long-period fiber gratings having a period in refractive index of about 100 nm to 1 µm can be provided.

The fabrication method of the fiber gratings of the invention is constituted by irradiating an interference light generated by interfering two coherent femtosecond laser radiations or picosecond laser radiations to an optical fiber comprising a core made from silica glass free of germanium and a cladding surrounding the outer periphery thereof, thereby writing the gratings in the core.

Further, in the fabrication method of the fiber gratings of the invention, a flat part is provided to the outer surface of the cladding, and the interference light is irradiated to the flat part.

Furthermore, in the fabrication method of the fiber gratings of the invention, a protective coating layer is provided to the outer periphery of the cladding, and the interference light is irradiated from the outer side of the protective coating layer.

According to the method for fabricating fiber gratings of the invention, the gratings can be written in by irradiating a single pulse irradiation of a femtosecond laser or a picosecond laser; thus, the gratings can be written in on-line during spinning the optical fibers, and, because a femtosecond laser or a picosecond laser having high transmittance with respect to the protective coating layer is used as the light source for writing, the gratings can be written in without removing the protective coating layer of the optical fiber core; thus, fiber gratings needless of recoating and having no degradation in intensity can be provided.

### Brief Description of the Drawings

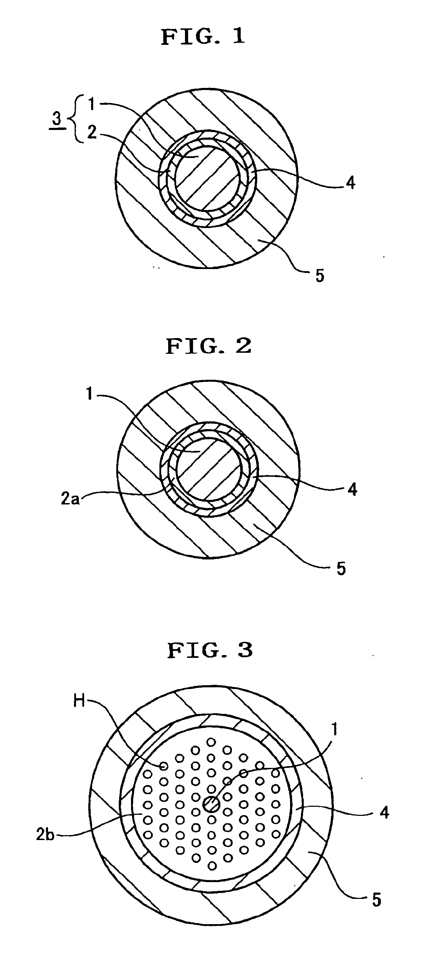

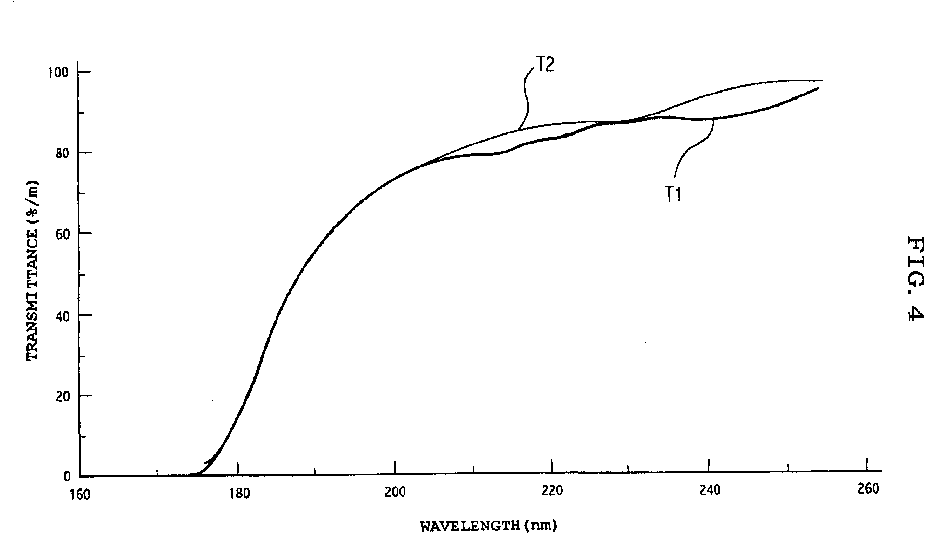

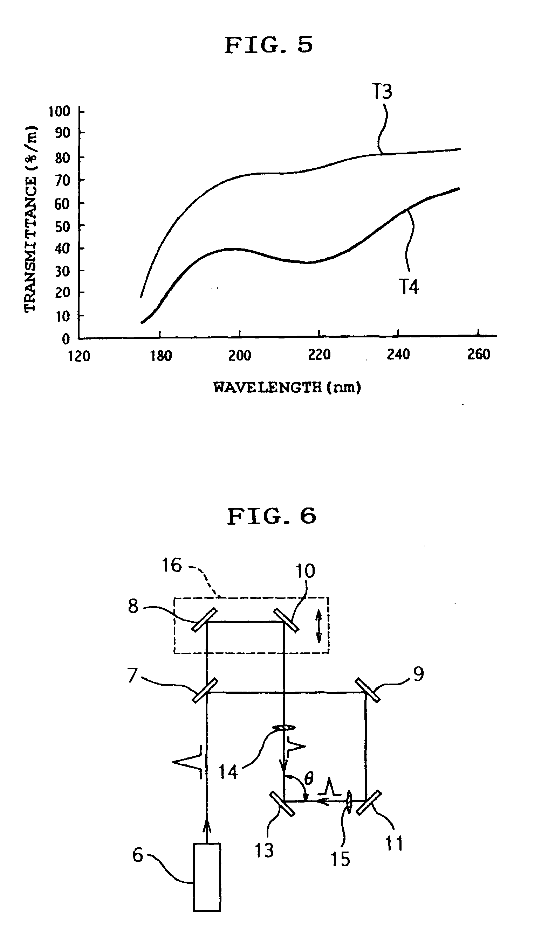

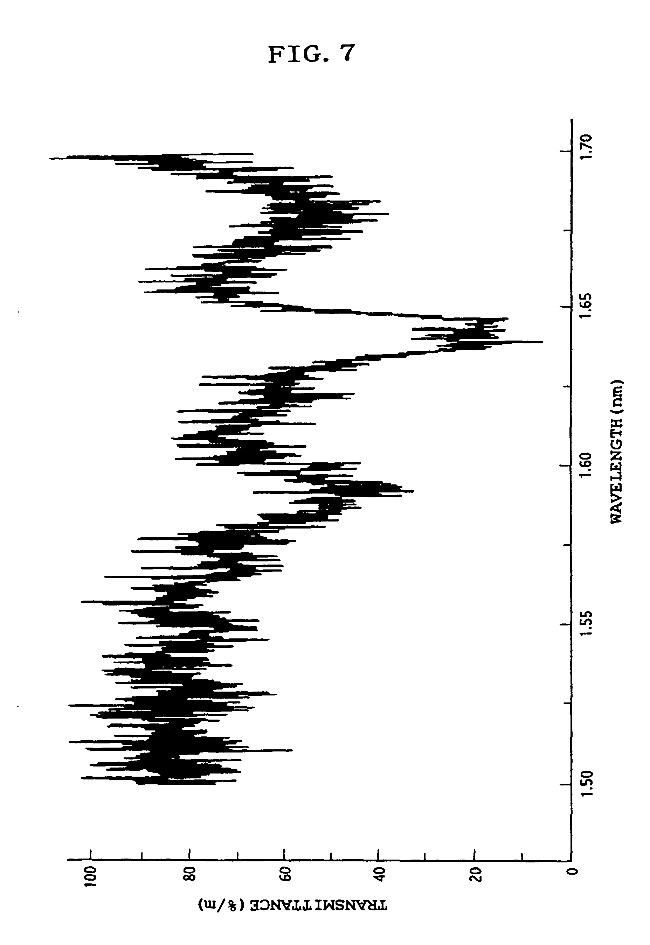

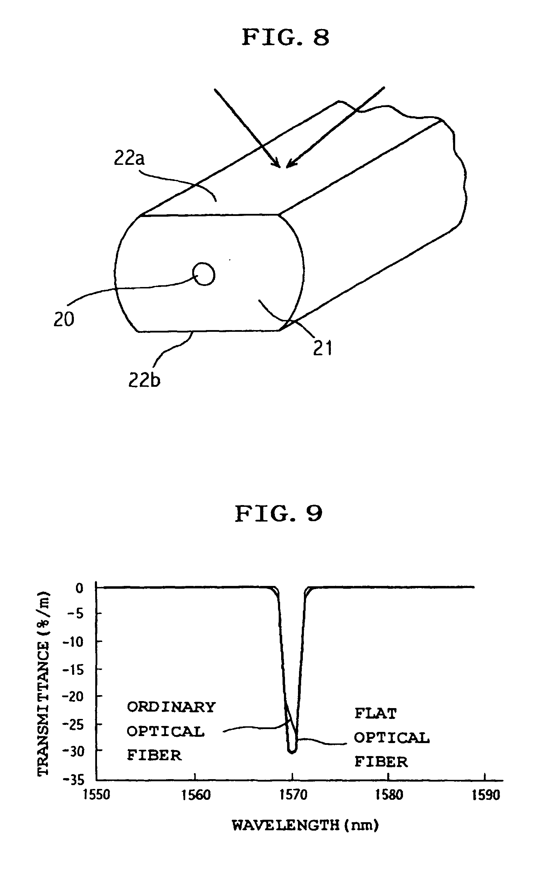

FIG. 1 is a lateral cross section view of fiber gratings of the invention; FIG. 2 is a lateral cross section view of fiber gratings of another embodiment of the invention; FIG. 3 is a lateral cross section view of fiber gratings of yet another embodiment of the invention; FIG. 4 is an explanatory diagram showing the characteristics of fiber gratings of the invention; FIG. 5 is an explanatory diagram showing the characteristics of fiber gratings of the invention; FIG. 6 is a constitutional diagram showing a fabrication system of fiber gratings of the invention; FIG. 7 is a diagram showing transmission properties of fiber gratings fabricated according to the fabrication method for fiber gratings of the invention; FIG. 8 is an oblique view showing another embodiment of an optical fiber of the invention; and FIG. 9 is a diagram showing transmission properties of an optical fiber having a flat part and that of an ordinary optical fiber.

### Best Mode for Carrying Out the Invention

Preferred embodiments of fiber gratings and of fabrication methods for fiber gratings are described below by making reference to drawings.

FIG. 1 shows a lateral cross section view of fiber gratings according to the invention, and FIGS. 2 and 3 each show lateral cross section views of other embodiments of the fiber gratings according to the invention. In FIGS. 2 and 3, the parts in common with those in FIG. 1 are referred by attaching the same symbols.

Referring to FIG. 1, the fiber gratings of the invention comprises an optical fiber 3 having provided thereto a cladding 2 surrounding the outer periphery of a core 1 having the gratings written in by the method described hereinafter, a protective layer 4 provided to the outer periphery of the optical fiber 3, and an outer protective layer 5 provided, if necessary, to the outer periphery of the protective layer 4.

The core 1 is constituted by a silica glass containing 100 to 1000 ppm of fluorine. Conventionally, fluorine had been doped in the cladding to lower the refractive index, however, in the invention, a predetermined amount of fluorine is added in the silica glass which forms the core 1 to thereby increase the transmittance of the ultraviolet radiation that is transmitted through the optical fiber. Here, the content of fluorine in the silica glass is set to 100 ppm or higher, because, if the content should be lower than 100 ppm, the transmittance of the ultraviolet radiation transmitted through the optical fiber would be reduced; furthermore, the content of fluorine is set to 1000 ppm or lower by taking into consideration of the fluorine content of the cladding, as is describedhereinafter. Furthermore, from the viewpoint of preventing deterioration of optical fibers attributed to ultraviolet radiation from occurring on silica glasses containing 100 to 1000 ppm of fluorine, it is desirable that the OH groups are incorporated in a range of 4 to 7 ppm. The content of OH groups is set in a range of 4 to 7 ppm because, if the content should be less than 4 ppm, the drop in transmittance of the ultraviolet light transmitted through the optical fiber cannot be prevented from occurring; on the other hand, if the content exceeds 7 ppm, a drop occurs in transmittance.

The cladding 2 is constituted from a silica glass containing from 1000 to 7000 ppm fluorine, or a silica glass containing 2000 to 10000 ppm boron. By thus incorporating fluorine or boron in the silica glass at a predetermined amount, a drop in transmittance of light transmitted through the optical fiber can be prevented from occurring. The fluorine content in silica glass is set to 1000 ppm or higher by taking the content of fluorine in core 1 into consideration, and is set to 7000 ppm or lower by taking the saturation amount of fluorine in silica glass into consideration. The boron content in silica glass is set in a range of 2000 to 10000 ppm; because, if the content of boron in silica glass should be lower than 2000 ppm, it becomes difficult from the relation with the refractive index of core 1, to prevent a drop from occurring in the transmittance of light transmitted through the optical fiber. The boron content is set to 10000 ppm or lower by taking the saturation amount of boron in silica glass into consideration.

In the embodiment above, a cladding 2 made from silica glass containing predetermined amount of fluorine or boron is provided on the outer periphery of the core 1. However, as shown in FIG. 2, a cladding 2a made from an ultraviolet-transmitting resin can be provided surrounding the outer periphery of core 1 instead of the cladding 2. As such an ultraviolet-transmitting resin, preferred is a fluorine-based resin, and from the viewpoint of light transmittance, preferred is an amorphous fluororesin. Since the transmittance of a crystalline fluororesin decreases due to light scattering, the crystallinity of the fluororesin for use as the cladding 2a is preferably 30% or lower. Further, in case of an amorphous fluororesin, the crystallinity thereof is preferably set to 20% or lower. As an example of such a fluororesin, suitably used are fluoropolymers having aliphatic cyclic structure in the main chain, for instance, amorphous perfluororesin (trademark: Cytop, manufactured by Asahi Glass Co., Ltd.).

Furthermore, as shown in FIG. 3, a cladding 2b having plural hollow holes H may be formed surrounding the outer periphery of core 1 instead of the cladding 2 . The hollow holes H are formed in plural with the optical axis of the optical fiber, and the total cross area thereof is set to account for approximately 10 to 60% of the cross section area of the optical fiber. Further, the plural hollow holes H are provided in such a manner that they should be evenly arranged with respect to the core 1.

In the example, the refractive index can be set at a low value by the air that is present inside the hollow holes H, to thereby optimize the transmission of light.

Theprotective layer 4 is provided in order tomechanically protect the core 1 and the claddings 2, 2a, and 2b, while simultaneously protecting them from the environment. Usable as the protective layer 4 are silicone resin, polyimide resin, urethane resin, acrylate resin, and the like. Furthermore, an external protective layer 5 may be provided surrounding the outer periphery of the protective layer 4, if necessary, to increase the strength of the optical fiber. The external protective layer 5 can be formed by melting nylon resin and the like, extruding it through a die to the outer periphery of the optical fiber, and cooling it thereafter.

As optical fibers of such a constitution, there may be mentioned such having claddings 2, 2a, and 2b that are 200 µm in diameter with respect to a core 1 with a diameter of 150 µm, or such having claddings 2, 2a, and 2b that are 1000 µm in diameter with respect to a core 1 with a diameter of 800 µm. On the other hand, the protective layer 4 is provided at a thickness of 100 to 250 µm, and the external protective layer 5 is provided at a thickness of 400 to 600 µm. Here, if the thickness of the protective layer 4 should become less than 100 µm, the core 1 as well as claddings 2, 2a, and 2b cannot be sufficiently protected; on the other hand, if the thickness of the external protective layer 5 should become less than 400 µm, it fails to attain sufficiently high strength.

### Examples

A silica glass cladding 2 containing 2000 ppm of fluorine was formed around a core 1 made from a fluorine-doped silica glass (trademark: AQX, manufactured by Asahi Glass Co., Ltd.) having a fluorine concentration of 100 to 200 ppm and OH group concentration of 4 to 7 ppm. The optical fiber was so manufactured that it should have a core 600 µm in diameter and a cladding 750 µm in diameter. After hydrogen treatment, the transmittance of ultraviolet radiations passing through 1 m of the ultraviolet light-transmitting optical fiber was measured at each wavelength before and after irradiating ultraviolet radiation using an ArF excimer laser.

FIG. 4 shows the measured results. Referring to the figure, it can be understood that the transmittance before irradiating ultraviolet radiation, T1, is approximately the same as the transmittance after irradiating ultraviolet radiation, T2, and that the transmittance of optical fiber is hardly deteriorated by the irradiation of ultraviolet radiation.

Furthermore, the transmittance of ultraviolet radiations transmitted through 1 m length of the ultraviolet light-transmitting optical fiber, which was not subjected to hydrogen treatment, was measured at each wavelength before and after irradiating ultraviolet radiation thereto using an ArF excimer laser. FIG. 5 shows the measured results. From the figure, it can be seen that the transmittance before ultraviolet irradiation, T3, is lowered to the transmittance after ultraviolet irradiation, T4; accordingly, it can be understood that the deterioration caused by ultraviolet irradiation can be prevented from occurring by applying hydrogen treatment.

The conditions for irradiating the ArF excimer laser above were as such that 6000 pulses were irradiated at a repetition frequency of 20 Hz and an optical density of 20 mJ/cm² per pulse, and the transmittance was obtained by measuring the transmittance of ultraviolet radiations passing through 1 m of the ultraviolet light-transmitting optical fiber at each wavelength before and after irradiating ultraviolet radiation using an ArF excimer laser.

From the results above, it can be understood that the optical fiber of the invention increases the transmittance of ultraviolet radiation, and that it improves the drop in transmittance induced by ultraviolet irradiation as to reduce the degradation effect. In particular, it has been found that, in the optical fibers subjected to hydrogen treatment, there is no drop in transmittance ascribed to ultraviolet light irradiation, and the characteristics thereof are considerably improved.

Accordingly, by using the fiber gratings of the aforementioned constitution, deep ultraviolet radiations and vacuum ultraviolet radiations can be propagated at high transmittance, while preventing degradation attributed to the irradiation of deep ultraviolet radiations and vacuum ultraviolet radiations from occurring, thereby providing fiber gratings having long-term stability.

The fiber gratings of the constitution above can be favorably applied to photolithography devices using excimer lasers emitting deep ultraviolet and vacuum ultraviolet radiations, as well as to surface cleaning devices using excimer lamps.

Then, the method for fabricating fiber gratings according to the present invention is described below.

FIG. 6 is a diagram showing the constitution of a system for use in fabricating the fiber gratings of the invention.

Referring to the figure, symbol 6 shows a light source made from a femtosecond laser, in which a beam splitter 7 and a first reflection mirror 8, which are each tilted by an angle of 45 degrees, are arranged separated from each other along the optical path in the proceeding direction of the femtosecond laser beam. Furthermore, a second and a third reflection mirror 9 and 10, which are each tilted by an angle of 45 degrees, are arranged in such a manner that they are disposed opposed to each other in the direction of reflecting femtosecond laser beam by the beam splitter 7 and the first reflection mirror 8, and, furthermore, a fourth reflection mirror 11, which is tilted by an angle of 45 degrees, is arranged opposed to the direction of reflecting the femtosecond laser beam by the second reflection mirror 9. Further, an optical fiber core wire 13, which is the object to be written in, is arranged tilted by an angle of 45 degrees at the crossing point of the directions of the femtosecond laser beams reflected by the third and the fourth reflection mirror 10 and 11, i.e., at the irradiation region of the interfered light; further, the first and the second lens 14 and 15 are placed in each of the optical paths between the third and the fourth reflection mirror 10 and 11 and the optical fiber core wire 13. Here, symbol 16, which indicates the part between the first and the third reflection mirror 8 and 10 that are arranged at a distance from each other, shows the optical delay region.

A mode-locked titanium sapphire femtosecond laser operating at a wavelength of 800 nm and at a pulse width of 100 femtosecond was used as the light source 6 for writing, and the optical fiber core wire 13, which is the object to be written in, is set in the region to which the femtosecond laser beam is collimated without removing the protective layer 4 (see FIG. 1) and (or) the external protective layer 5 (see FIG. 1) (which is referred to hereinafter as "protective coating layer 9").

In the fabrication system for fiber gratings above, the femtosecond laser output from the light source 6 is split into a first beam reflected to an angle of 90 degrees by abeam splitter 7 and a straightly advancing second beam cut out by the beam splitter 7. Then, the first beam is reflected at an angle of 90 degrees by the second reflection mirror 9, reflected again at an angle of 90 degrees by the fourth reflection mirror 11, and is collimated by the second lens 15 and irradiated onto the object to be written, i.e., the optical fiber core wire 13. Moreover, the second beam is reflected by the first reflection mirror 8 at an angle of 90 degrees, and is reflected again by the second mirror 10 at an angle of 90 degrees, which is then collimated by the first lens 14 and irradiated to the object to be written, i.e., the optical fiber core wire 13.

As described above, the femtosecond laser output from the light source 6 is split into two by the beam splitter 7, which interfere with each other in the vicinity of the core of the optical fiber core wire 13 to generate a change in the refractive indices of the glass depending on the light intensity distribution of the interference fringes. In this manner, the gratings are written in the core 1 (see FIG. 1).

Here, as the first to fourth reflection mirrors 8 to 11, preferred is to use movable reflection mirrors whose angle can be adjusted. In the case movable reflection mirrors are used, the angle of irradiating the first and the second beams with respect to the optical fiber core wire 13 can be changed by adjusting the angles of the first to the fourth reflection mirrors 8 to 11, and the period of the grating can be thereby changed.

FIG. 7 shows the transmission characteristics of the fiber gratings fabricated by irradiating collimated beam of femtosecond laser according to the invention.

From the figure, a loss peak can be seen in the vicinity of 1640 nm.

FIG. 8 shows another example of an optical fiber. In the example, a cladding 21 having flat parts 22a and 22b on the top and the bottom parts is provided surrounding the outer periphery of the core 20, such that the first and the second beams should be irradiated to the flat part 22a on the top part of the cladding 21.

Since flat parts 22a and 22b are provided to the cladding 21 of the example, the effect of the interfering femtosecond laser beams can be increased as compared with an ordinary round type optical fiber.

FIG. 9 shows the transmission characteristics of an optical fiber provided with a flat part having a grating written in, and that of an ordinary optical fiber (round type).

Referring to the figure, it can be understood that the transmittance at a wavelength in the vicinity of 1570 nm is improved in shielding properties by about 5 dB for the optical fibers having flat parts as compared with that for an ordinary optical fiber.

As described above, according to the method for fabricating fiber gratings of the invention, gratings can be successfully written in the core of the optical fiber by using the so-called two light wave interference of femtosecond lasers. Furthermore, since gratings can be written in within approximately 100 femtoseconds by irradiating one pulse of femtosecond laser, the time necessary for writing conventional gratings (about 30 minutes) can be considerably shortened. Furthermore, by changing the angle of interference of two light waves, the period of the gratings can be changed, and fiber gratings with longer period can be provided. Moreover, by using femtosecond lasers having high transmittance with respect to the protective coating layer as the light source for writing in, the gratings can be written without removing the protective coating layer of the optical fiber core wire, and fiber gratings free of recoating and free of deterioration in strength can be implemented. In addition, since the time necessary for writing in the gratings is shortened and because femtosecond laser can be irradiated from the outside of the protective coating layer, gratings can be written in on-line during spinning the optical fibers.

In the example above, a case of writing the gratings in the core by irradiating femtosecond laser is described; however, the same effect can be obtained by writing the gratings in the core by irradiating picosecond laser beams or by irradiating picosecond laser beams in chirping mode of femtosecond lasers. Furthermore, although interference light is irradiated without removing the protective coating layer, the interference light may be irradiated after removing the protective coating layer.

### Industrial Applicability

As is clearly understood from the description above, the fiber gratings according to the present invention enables writing in the gratings in a core made from silica glass free of germanium; for instance, gratings can be written in optical fibers having cores made from pure quartz glass, fluorine-doped silica glass, boron-doped silica glass, and phosphorus-doped silica glass. Thus, the invention provides fiber gratings using silica glass free of germanium, which were never achieved to present, and, moreover, provides fiber gratings for use in ultraviolet radiations. Furthermore, since the period of the gratings can be easily modified by adjusting the optical system, so-called long-period fiber gratings having a period of 100 nm to 1 µm in refractive index can be provided. Moreover, since the method of fabricating the fiber gratings of the invention enables writing in the gratings by irradiating one pulse of femtosecond laser, the gratings can be written in on-line during spinning the optical fibers; and, because a femtosecond laser having high transmittance with respect to the protective coating layer is used as the light source for writing, the gratings can be written in without removing the protective coating layer of the optical fiber core; thus, fiber gratings needless of recoating and having no degradation in intensity can be provided.

## Claims

1. Fiber gratings **characterized in that** it comprises a core made from silica glass free of germanium and a cladding surrounding the outer periphery thereof, and that said core has gratings written in by irradiating femtosecond laser or picosecond laser radiations.

2. Fiber gratings as claimed in claim 1, which is **characterized in that** said core is made from a silica glass containing 100 to 1000 ppm of fluorine.

3. Fiber gratings as claimed in claim 1 or claim 2, which is **characterized in that** said cladding is made from a silica glass containing 1000 to 7000 ppm of fluorine, or a silica glass containing 2000 to 10000 ppm of boron.

4. Fiber gratings as claimed in claim 1 or claim 2, which is **characterized in that** said cladding is made from an ultraviolet-transmitting resin.

5. Fiber gratings as claimed in one of claims 1 to claim 4, which is **characterized in that** said cladding comprises plural hollow holes in parallel with the optical axis.

6. Fiber gratings as claimed in one of claims 1 to claim 5, which is **characterized in that** said cladding is provided with a protective coating layer on the outer periphery thereof.

7. A method for fabricating fiber gratings, **characterized in that** it comprises irradiating an interference light generated by interfering two coherent femtosecond laser radiations or picosecond laser radiations to an optical fiber comprising a core made from silica glass free of germanium and a cladding surrounding the outer periphery thereof, thereby writing the gratings in said core.

8. A method for fabricating fiber gratings as claimed in claim 7, which is **characterized in that** a flat part is provided to the outer surface of said cladding, and that said interference light is irradiated to said flat part.

9. A method for fabricating fiber gratings as claimed in claim 7 or claim 8, which is **characterized in that** a protective coating layer is provided to the outer periphery of said cladding, and that said interference light is irradiated from the outer side of said protective coating layer.
